# FASCICULE DE BREVET EUROPEEN

(11) **EP 3 356 662 B1**
(45) Date de publication et mention de la délivrance du brevet: **14.08.2019**
(21) Numéro de dépôt: 16788158.0
(22) Date de dépôt: 30.09.2016
(51) Int. Cl.: B08B 3/08, B08B 7/00, C25B 1/04, F02M 26/00, F02B 77/04, F02M 26/50

(54) **SYSTÈME DE DÉCALAMINAGE D'UN MOTEUR À COMBUSTION INTERNE**
SYSTEM ZUR ENTKALKUNG EINES VERBRENNUNGSMOTORS
SYSTEM FOR DESCALING AN INTERNAL COMBUSTION ENGINE

(30) Priorité: 02.10.2015 FR 1502059
(43) Date de publication de la demande: 08.08.2018
(73) Titulaire: Flex Fuel - Energy Development, 06660 Valbonne (FR)
(72) Inventeur: LE POLLES, Sébastien, Alain, 77690 Montigny-sur-Loing (FR)
(74) Mandataire: Bouchet, Geneviève
(86) Numéro de dépôt international: PCT/FR2016/052503
(87) Numéro de publication internationale: WO 2017/055768

(56) Documents cités:
- WO-A1-00/47344
- WO-A1-2009/156670
- WO-A2-00/51751
- US-A1- 2008 011 327

## Description

### Domaine technique et état de l'art

L'invention concerne un système de décalaminage d'un moteur à combustion interne, système comprenant un moyen d'injection agencé pour injecter un fluide nettoyant sur une entrée d'admission d'un mélange combustible-air du moteur tournant. L'invention est notamment intéressante pour l'entretien des véhicules à moteur, tels que véhicules légers, véhicules utilitaires légers et lourds, poids lourds, et plus généralement pour l'entretien de tout système équipé d'un moteur thermique à combustion interne. Un système de nettoyage d'un moteur et d'un EGR est présenté dans le document WO 00/51751.

De manière connue, dans les moteurs à combustion interne, notamment de type Diesel, pour réduire la production de NOx, composés d'oxydes d'azote particulièrement polluants, il est nécessaire d'abaisser la température de combustion et de réduire la quantité d'oxygène disponible à l'intérieur du moteur tournant. Pour cela, une technique développée dans les années 70 consiste à rediriger une partie des gaz d'échappement, inertes, vers l'entrée d'admission du mélange combustible-air du moteur. Une vanne EGR (pour Exhaust gaz recirculation) à débit variable est positionnée sur le circuit de recirculation entre l'échappement et l'entrée d'admission ; le taux d'ouverture de la vanne est pilotée par le calculateur du système (véhicule ou autre) dont le moteur est équipé d'une vanne EGR, en fonction de paramètres du moteur tels qu'une température mesurée des gaz d'échappement, une puissance demandée au moteur, ... La production d'oxydes d'azote dépendant notamment de la température et de la présence d'oxygène pendant la combustion, l'introduction de gaz brûlés agit sur les deux paramètres (température et proportion d'oxygène).

Si l'utilisation d'une vanne EGR permet de diminuer à moindre frais la production de NOx, elle présente d'autres inconvénients. En particulier, la diminution de température de combustion, recherchée pour limiter la production de NOx, entraîne également l'augmentation de la production de suies lors de la combustion, ce qui a notamment pour conséquence d'encrasser le circuit d'admission, le circuit d'échappement des gaz brûlés et le circuit de recirculation des gaz d'échappement ; ceci diminue le rendement moteur et augmente la pollution générée par le moteur.

Une technique connue pour nettoyer le moteur et ses circuits consiste à injecter un fluide comprenant de l'hydrogène et de l'oxygène dans le circuit d'admission pendant que le moteur tourne. Le pouvoir hautement inflammable de l'hydrogène permet d'améliorer la combustion dans les cylindres du moteur. La recombinaison de l'hydrogène et de l'oxygène en eau à l'état supercritique, agissant comme un solvant, permet de diluer et évacuer la calamine située sur les parties sensibles du moteur, notamment les têtes et clapets d'injecteurs, le ou les turbos, la vanne EGR, les soupapes d'admission et d'échappement, les pistons, les segments, les cylindres, le circuit et le collecteur d'admission et, dans certaines conditions, le filtre à particules et le catalyseur.

On constate toutefois dans la pratique que les techniques d'injection de fluide nettoyant connues ont une efficacité limitée notamment pour nettoyer le circuit et le collecteur d'admission, les soupapes d'admission et la vanne EGR du moteur tournant.

### Description de l'invention

L'invention vise à améliorer les systèmes connus de décalaminage d'un moteur à combustion interne, système du type comprenant un moyen d'injection agencé pour injecter un fluide nettoyant sur une entrée d'admission d'un mélange combustible-air du moteur tournant.

A cet effet, le système de décalaminage selon l'invention est caractérisé en ce qu'il comprend également un moyen de commande agencé pour commander une ouverture ou une fermeture d'une vanne EGR du moteur en fonction de paramètres du fluide nettoyant injecté.

La commande de l'ouverture et de la fermeture de la vanne EGR par le système de décalaminage lui-même permet de mieux faire circuler le fluide nettoyant dans la partie haut moteur, dans le circuit d'admission et dans le circuit de recirculation des gaz, en s'affranchissant du rapport cyclique d'ouverture / fermeture (communément appelé RCO) de la vanne EGR, tel qu'imposé par le constructeur. Il devient ainsi possible de nettoyer la vanne EGR elle-même, le circuit d'admission d'air, les soupapes d'admission et le turbo, de manière certaine, plus simple et plus profonde.

Dans un système selon l'invention, le fluide nettoyant peut être un mélange hydrogène / oxygène en des proportions prédéfinies, et par exemple de l'eau à l'état supercritique.

Selon un mode de réalisation, le système selon l'invention peut comprendre également, en amont du moyen d'injection, un dispositif de production d'hydrogène et d'oxygène gazeux par électrolyse d'eau. Le système de décalaminage devient ainsi totalement autonome et peut être ainsi déplacé au plus proche d'un moteur à nettoyer.

Le moyen de commande est de préférence agencé pour commander une ouverture ou une fermeture de la vanne EGR pendant une durée prédéfinie fonction d'une durée ou d'un débit d'injection de fluide nettoyant. Ajuster l'ouverture/ fermeture de la vanne EGR en fonction de la durée et / ou du débit d'injection permet d'optimiser la qualité et la rapidité du nettoyage réalisé.

Selon un mode de réalisation, le moyen de commande peut être agencé pour commander la vanne EGR selon un cycle comprenant une première phase d'ouverture de la vanne EGR pendant un premier temps prédéfini suivie une deuxième phase de fermeture de la vanne EGR pendant un deuxième temps prédéfini, cycle répété en fonction de la durée d'injection de fluide nettoyant. Lorsque la vanne EGR est fermée, le nettoyage s'effectue principalement au niveau du circuit aval du moteur, notamment au niveau du circuit d'échappement. L'ouverture de la vanne EGR permet de nettoyer en profondeur le circuit en amont du moteur, c'est à dire le circuit d'admission et le circuit de recirculation des gaz d'échappement, notamment la partie du circuit de recirculation située entre la vanne EGR et l'entrée d'admission des gaz du moteur.

Selon un autre mode de réalisation, le moyen de commande peut être agencé pour commander la vanne EGR selon un cycle répété à une fréquence de cycle fonction de la durée d'injection du fluide nettoyant, cycle comprenant une première phase d'ouverture de la vanne EGR pendant un premier temps prédéfini, une deuxième phase de fermeture de la vanne EGR pendant un deuxième temps prédéfini et une troisième phase au cours de laquelle la vanne EGR est alternativement ouverte et fermée à une fréquence au moins dix fois supérieure à la fréquence de répétition du cycle, pendant un troisième temps prédéfini. La troisième phase, avec une commande alternée d'ouverture / fermeture de la vanne EGR, permet de "taper" la soupape de la vanne EGR, générant ainsi des micro-chocs et des vibrations qui facilitent la dilution des couches de calamine présentes sur la soupape de la vanne EGR elle-même.

Des essais ont permis d'obtenir un bon nettoyage du moteur avec le premier, le deuxième et le troisième temps prédéfinis de l'ordre de 1 à 10 mn, et de préférence de l'ordre de 5 mn avec, pendant le troisième temps du cycle, un changement d'état de la vanne EGR toutes les 0,5 secondes ; soit un cycle de nettoyage de 3 à 30 mn, de préférence de l'ordre de 15 mn, cycle répété pendant 1 à 2H pour un nettoyage complet.

### Brève description des figures

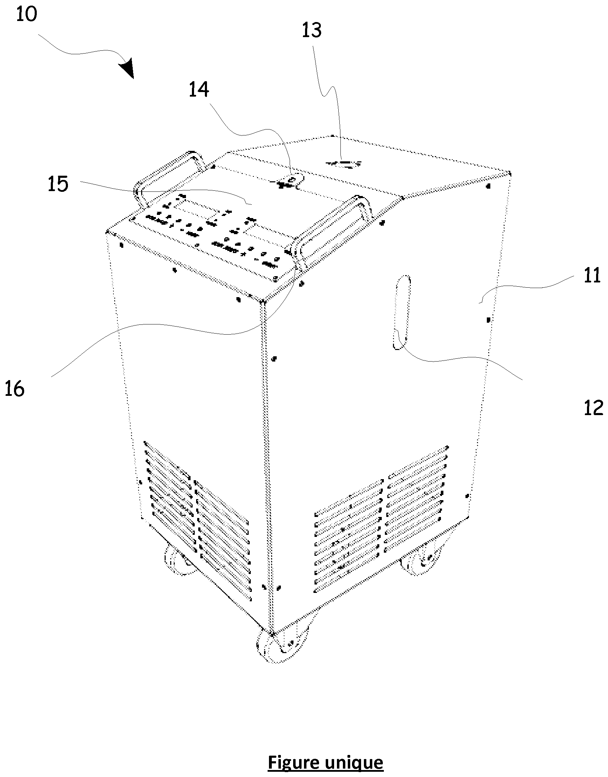

L'invention sera mieux comprise, et d'autres caractéristiques et avantages de l'invention apparaîtront à la lumière de la description qui suit d'exemples de réalisation d'un système de décalaminage d'un moteur selon l'invention. Ces exemples sont donnés à titre non limitatif. La description est à lire en relation avec le dessin annexé dans lequel la figure unique est une vue d'ensemble d'un système selon l'invention.

### Description d'un mode de réalisation de l'invention

Comme dit précédemment, le système selon l'invention est un système de décalaminage d'un moteur à combustion interne, système du type comprenant un moyen d'injection agencé pour injecter un fluide nettoyant sur une entrée d'admission d'un mélange combustible-air du moteur tournant. Le système selon l'invention est caractérisé en ce qu'il comprend également un moyen de commande agencé pour commander une ouverture ou une fermeture d'une vanne EGR du moteur en fonction de paramètres du fluide nettoyant injecté.

Selon un mode de réalisation, non représenté, le système peut être relié à un réservoir de fluide de nettoyage externe.

Selon le mode de réalisation représentée sur le dessin le système 10 selon l'invention est complètement autonome et agencé pour injecter dans le moteur tournant un fluide nettoyant qui est un mélange d'hydrogène et d'oxygène produit par le système lui-même.

A cet effet, le système 10 comprend, dans une structure 11, un réservoir d'eau et des moyens connus par ailleurs pour produire de l'hydrogène et de l'oxygène par électrolyse de l'eau. Sur le côté de la structure est prévue une lucarne 12 permettant de visualiser le niveau d'eau dans le réservoir, Sur le dessus de la structure est prévue une ouverture 13 avec un bouchon pour le remplissage du réservoir d'eau. Sur le dessus de la structure est prévu également un panneau de commande 15 permettant à l'utilisateur de régler les différents paramètres du système décrits ci-dessous. Sur le panneau de commande est intégré un connecteur 14 pour brancher un câble reliant l'installation directement au véhicule, plus précisément à la vanne EGR du moteur pour en piloter l'ouverture et / ou la fermeture.

Le système représenté est agencé pour réaliser un nettoyage en commandant la vanne EGR selon un cycle répété à une fréquence de cycle fonction de la durée d'injection du fluide nettoyant, cycle comprenant une première phase d'ouverture de la vanne EGR pendant un premier temps prédéfini, une deuxième phase de fermeture de la vanne EGR pendant un deuxième temps prédéfini et une troisième phase au cours de laquelle la vanne EGR est alternativement ouverte et fermée à une fréquence au moins dix fois supérieure à la fréquence de répétition du cycle et ce pendant un troisième temps prédéfini.

Dans un mode de fonctionnement automatique, le système est programmé pour commander la vanne EGR du véhicule en cours de nettoyage selon un cycle répété pendant 30 minutes à 4 Heures, cycle comprenant :
- une première phase d'ouverture de la vanne EGR pendant un premier temps prédéfini de 5 mn environ,
- une deuxième phase de fermeture de la vanne EGR pendant un deuxième temps prédéfini de 5 mn environ et
- une troisième phase au cours de laquelle la vanne EGR est alternativement ouverte et fermée pendant des temps de l'ordre de 0,5 seconde, ce fonctionnement alterné durant un troisième temps prédéfini de l'ordre de 5 mn également.

Selon un mode de réalisation, le premier temps, le deuxième temps et le troisième temps sont sensiblement de même durée.

Alternativement, l'utilisateur peut, à partir du panneau de commande, choisir la durée de chaque phase, par exemple entre 0 et 120 mn. En fonction de la cylindrée du moteur (moteur, voiture, camion, ...) et de son degré d'encrassement, l'utilisateur peut également, toujours à partir du panneau de commande, choisir la durée totale du programme de nettoyage et / ou augmenter ou diminuer le débit du fluide nettoyant et / ou modifier les proportions du mélange gazeux hydrogène / oxygène du fluide nettoyant.

Pour la sécurité et l'ergonomie du système, de nombreux éléments additionnels sont prévus, en particuliers les éléments ci-dessous.

Les moyens de production d'hydrogène sont sécurisés par la présence d'un détecteur de niveau d'eau dans le réservoir, d'un moyen de coupure de la production d'hydrogène en cas de surpression et d'un moyen d'alerte (alarme sonore). Egalement, lorsque la sortie de fluide est déconnectée du moteur, le système est étanche.

Pour faciliter le déplacement de l'installation au plus près du moteur à nettoyer, l'installation est montée sur roues et des poignées 16 de préhension sont prévues à hauteur d'homme.

Une alerte sonore est programmée 5 mn avant la fin du programme de nettoyage, puis une deuxième alerte à la fin du programme.

Selon le mode de réalisation représentée sur le dessin, l'ensemble des éléments du système selon l'invention sont intégrés dans une structure 10 de dimensions et de poids compatibles avec une manipulation manuelle. Un tel système est bien approprié pour le nettoyage de moteurs de cylindrée petite ou moyenne, par exemple un moteur de véhicule léger particulier, de véhicule utilitaire léger, d'une moto, ...

Selon une variante, non représentée mais mise en oeuvre, l'ensemble des éléments d'un système selon l'invention sont intégrés dans le volume utile d'un utilitaire léger, ou sur une remorque d'un camion. Le système peut ainsi être déplacé sans effort humain. De plus, le dispositif de production d'hydrogène peut être dimensionné pour produire un débit de fluide nettoyant plus important, et le moyen d'injection peut être dimensionné pour injecter le fluide nettoyant à une température et / ou une pression plus importantes. Le système est ainsi mieux adapté pour traiter des moteurs de plus grosses cylindrées.

Egalement, le système selon l'invention peut être utilisé pour bien d'autres applications que le domaine des véhicules automobiles ; il peut ainsi être utilisé pour nettoyer tout type de moteurs : moteurs de bateau, de véhicules militaires, moteurs d'installations industrielles, d'installation de chauffage, ...

## Revendications

1. Système de décalaminage d'un moteur à combustion interne, système comprenant un moyen d'injection agencé pour injecter un fluide nettoyant sur une entrée d'admission d'un mélange combustible-air du moteur tournant, système **caractérisé en ce qu'**il comprend également un moyen de commande agencé pour commander une ouverture ou une fermeture d'une vanne EGR du moteur en fonction de paramètres du fluide nettoyant injecté.

2. Système selon la revendication 1 dans lequel le fluide nettoyant est un mélange hydrogène / oxygène, le moyen d'injection étant également agencé pour réaliser le mélange hydrogène / oxygène selon des proportions prédéfinies.

3. Système selon la revendication 2 comprenant également, en amont du moyen d'injection, un dispositif de production de hydrogène et d'oxygène gazeux par électrolyse d'eau.

4. Système selon l'une des revendications 1 à 3, dans lequel le fluide nettoyant est de l'eau à l'état supercritique.

5. Système selon l'une des revendications 1 à 4 dans lequel le moyen de commande est agencé pour commander une ouverture de la vanne EGR pendant une durée prédéfinie fonction d'une durée ou d'un débit d'injection de fluide nettoyant.

6. Installation selon la revendication 5 dans laquelle le moyen de commande est agencé pour commander la vanne EGR selon un cycle comprenant une première phase d'ouverture de la vanne EGR pendant un premier temps prédéfini suivie une deuxième phase de fermeture de la vanne EGR pendant un deuxième temps prédéfini, cycle répété en fonction de la durée d'injection de de fluide nettoyant.

7. Système selon la revendication 5 dans lequel le moyen de commande est agencé pour commander la vanne EGR selon un cycle répété à une fréquence de cycle fonction de la durée d'injection du fluide nettoyant, cycle comprenant une première phase d'ouverture de la vanne EGR pendant un premier temps prédéfini, une deuxième phase de fermeture de la vanne EGR pendant un deuxième temps prédéfini et une troisième phase au cours de laquelle la vanne EGR est alternativement ouverte et fermée à une fréquence au moins dix fois supérieure à la fréquence de répétition du cycle et ce pendant un troisième temps prédéfini.

8. Système selon la revendication 7 dans lequel le premier temps, le deuxième temps et le troisième temps sont sensiblement de même durée.

9. Système selon la revendication 8 dans laquelle le premier, le deuxième et le troisième temps prédéfinis sont de l'ordre de 1 à 10 mn, et de préférence de l'ordre de 5 mn.

10. Système selon l'une des revendications 5 à 8 dans lequel le premier, le deuxième et / ou de troisième temps sont ajustables par un utilisateur de l'installation, entre 0 et 120 mn.

## Patentansprüche

1. System zum Entzundern eines Verbrennungsmotors, wobei das System ein Einspritzmittel umfasst, das dazu eingerichtet ist, ein Reinigungsfluid über einen Zuführeinlass für ein Kraftstoff-Luft-Gemisch des laufenden Motors einzuspritzen, wobei das System **dadurch gekennzeichnet ist, dass** es auch ein Steuerungsmittel umfasst, das dazu eingerichtet ist, ein Öffnen oder ein Schließen eines AGR-Ventils des Motors in Abhängigkeit von Parametern des eingespritzten Reinigungsfluids zu steuern.

2. System nach Anspruch 1, bei dem das Reinigungsfluid ein Wasserstoff/Sauerstoff-Gemisch ist, wobei das Einspritzmittel auch dazu eingerichtet ist, das Wasserstoff/Sauerstoff-Gemisch nach vorgegebenen Verhältnissen auszuführen.

3. System nach Anspruch 2, umfassend ferner stromauf des Einspritzmittels eine Vorrichtung zur Erzeugung von gasförmigem Wasserstoff und Sauerstoff durch Elektrolyse von Wasser.

4. System nach einem der Ansprüche 1 bis 3, bei dem das Reinigungsfluid Wasser im überkritischen Zustand ist.

5. System nach einem der Ansprüche 1 bis 4, bei dem das Steuerungsmittel dazu eingerichtet ist, ein Öffnen des AGR-Ventils während einer vorgegebenen Dauer zu steuern, die von einer Einspritzdauer oder -menge des Reinigungsfluids abhängig ist.

6. Anlage nach Anspruch 5, bei der das Steuerungsmittel dazu eingerichtet ist, das AGR-Ventil nach einem Zyklus zu steuern, der eine erste Öffnungsphase des AGR-Ventils während einer ersten vorgegebenen Zeit, an die sich eine zweite Schließphase des AGR-Ventils während einer zweiten vorgegebenen Zeit anschließt, umfasst, wobei der Zyklus in Abhängigkeit von der Einspritzdauer des Reinigungsfluids wiederholt wird.

7. System nach Anspruch 5, bei dem das Steuerungsmittel dazu eingerichtet ist, das AGR-Ventil nach einem Zyklus zu steuern, der mit einer Zyklusfrequenz wiederholt wird, die von der Einspritzdauer des Reinigungsfluids abhängig ist, wobei der Zyklus eine erste Öffnungsphase des AGR-Ventils während einer ersten vorgegebenen Zeit, eine zweite Schließphase des AGR-Ventils während einer zweiten vorgegebenen Zeit und eine dritte Phase umfasst, während der das AGR-Ventil abwechselnd mit einer Frequenz geöffnet und geschlossen wird, die mindestens zehn Mal größer als die Wiederholfrequenz des Zyklus ist, und dies während einer dritten vorgegebenen Zeit.

8. System nach Anspruch 7, bei dem die erste Zeit, die zweite Zeit und die dritte Zeit im Wesentlichen die gleich lang sind.

9. System nach Anspruch 8, bei dem die erste, die zweite und die dritte vorgegebene Zeit in der Größenordnung von 1 bis 10 min und bevorzugt in der Größenordnung von 5 min liegen.

10. System nach einem der Ansprüche 5 bis 8, bei dem die erste, die zweite und/oder die dritte Zeit von einem Benutzer der Anlage zwischen 0 und 120 min verstellbar sind.

## Claims

1. System for descaling an internal combustion engine, descaling system comprising an injection means arranged so as to inject a cleaning fluid over an inlet 5for the inflow of a fuel-air mixture of the running engine, descaling system **characterized in that** it also comprises a control means arranged so as to control an opening or closing of an EGR valve of the engine according to parameters of the injected cleaning fluid.

2. Descaling system according to Claim 1, wherein the cleaning fluid is a hydrogen / oxygen mixture, the injection means also being arranged so as to produce the hydrogen / oxygen mixture according to predefined proportions.

3. Descaling system according to Claim 2, also comprising, upstream of the injection 15means, a device for producing gaseous hydrogen and oxygen by electrolysis of water.

4. Descaling system according to one of Claims 1 to 3, wherein the cleaning fluid is water in the supercritical state.

5. Descaling system according to one of Claims 1 to 4, wherein the control means is arranged so as to control an opening of the EGR valve for a predefined duration dependent on a duration or rate of injection of cleaning fluid.

6. Installation according to Claim 5, wherein the control means is arranged so as to control the EGR valve according to a cycle comprising a first phase of opening the EGR valve for a first predefined period followed by a second phase of closing the EGR valve for a second predefined period, cycle repeated according to the duration of injection of the cleaning fluid.

7. Descaling system according to Claim 5, wherein the control means is arranged so as to control the EGR valve according to a cycle repeated at a cycle frequency dependent on the duration of injection of the cleaning fluid, cycle comprising a first phase of opening the EGR valve for a first predefined period, a second phase of closing the EGR valve for a second predefined period and a third phase during which the EGR valve is alternately opened and closed at a frequency at least ten times higher than the repetition frequency of the cycle, this taking place for a predefined third period.

8. Descaling system according to Claim 7, wherein the first period, the second period and the third period are substantially of the same duration.

9. Descaling system according to Claim 8, wherein the first, the second and the third predefined periods are of the order of 1 to 10 minutes, and preferably of the order of 5 minutes.

10. Descaling system according to one of Claims 5 to 8, wherein the first, second and / or third periods can be adjusted, by a user of the installation, between 0 and 120 minutes.
